# EUROPÄISCHE PATENTANMELDUNG

(11) **EP 1 555 786 A1**
(43) Veröffentlichungstag der Anmeldung: **20.07.2005**
(21) Anmeldenummer: 04090009.4
(22) Anmeldetag: 14.01.2004
(51) Int. Cl.: H04L 29/06

(54) **Verfahren zum Aufbauen einer Datenverbindung zwischen einem ersten und einem zweiten mobilen Kommunikationsendgerät**

(71) Anmelder: Siemens Aktiengesellschaft, 80333 München (DE)
(72) Erfinder: Andersen, Frank-Uwe, 10625 Berlin (DE); Chudoba, Christian, 10405 Berlin (DE); Lemke, Michael, Dr., 13156 Berlin (DE); Meyer, Gerald, 82178 Puchheim-Bhf (DE)

(57) **Zusammenfassung**

Die Erfindung betrifft ein Verfahren zum Aufbauen einer Datenverbindung (DV) zur Übertragung von Datenpaketen zwischen einem ersten mobilen Kommunikationsendgerät (KEG1) und einem zweiten mobilen Kommunikationsendgerät (KEG2), wobei bei dem Verfahren auf eine Startnachricht des ersten datenpaketempfangsbereiten Kommunikationsendgerätes hin von einem mit dem ersten (KEG1) und dem zweiten Kommunikationsendgerät (KEG2) verbundenen Kommunikationsnetz (KN1) eine schriftliche Kurznachricht (SMS, SMSP, PSMS) an das zweite Kommunikationsendgerät übertragen wird, auf den Empfang der schriftlichen Kurznachricht (SMSP, SMS) hin von dem zweiten Kommunikationsendgerät ein datenpaketempfangsbereiter Zustand eingenommen wird, und daraufhin die Datenverbindung zwischen dem ersten Kommunikationsendgerät und dem zweiten Kommunikationsendgerät aufgebaut wird.

## Beschreibung

Die Erfindung betrifft ein Verfahren zum Aufbauen einer Datenverbindung zur Übertragung von Datenpaketen zwischen einem ersten mobilen Kommunikationsendgerät und einem zweiten mobilen Kommunikationsendgerät. Solche Datenverbindungen werden auch als "Peer-to-Peer-Datenverbindungen" bezeichnet. Beim Aufbauen derartiger Verbindungen kann der Fall auftreten, dass das zweite mobile Kommunikationsendgerät sich nicht in einem datenpaketempfangsbereiten Zustand ("Online-Zustand") befindet.

Der Erfindung liegt die Aufgabe zugrunde, ein Verfahren anzugeben, mit dem eine Datenverbindung zwischen Kommunikationsendgeräten auch dann aufgebaut werden kann, wenn sich eines der Kommunikationsendgeräte zu Verfahrensbeginn nicht in einem datenpaketempfangsbereiten Zustand befindet.

Diese Aufgabe wird erfindungsgemäß gelöst durch ein Verfahren zum Aufbauen einer Datenverbindung zur Übertragung von Datenpaketen zwischen einem ersten mobilen Kommunikationsendgerät und einem zweiten mobilen Kommunikationsendgerät, wobei bei dem Verfahren auf eine Startnachricht des ersten datenpaketempfangsbereiten Kommunikationsendgerätes hin von einem mit dem ersten und dem zweiten Kommunikationsendgerät verbundenen Kommunikationsnetz eine schriftliche Kurznachricht an das zweite Kommunikationsendgerät übertragen wird, auf den Empfang der schriftlichen Kurznachricht hin von dem zweiten Kommunikationsendgerät ein datenpaketempfangsbereiter Zustand eingenommen wird, und daraufhin die Datenverbindung zwischen dem ersten Kommunikationsendgerät und dem zweiten Kommunikationsendgerät aufgebaut wird. Dieses Verfahren schließt den wesentlichen Gedanken ein, dass eine schriftliche Kurznachricht (auch als SMS-Nachricht bezeichnet, SMS = Short Message Service) an das zweite nicht datenpaketempfangsbereite Kommunikationsendgerät übertragen wird. Dabei ist besonders vorteilhaft, dass zur Übertragung einer solchen schriftlichen Kurznachricht an das zweite Kommunikationsendgerät bei dem zweiten Kommunikationsendgerät kein Datenpaketempfang bzw. kein datenpaketempfangsbereiter Zustand ("Online-Zustand") benötigt wird, da schriftliche Kurznachrichten auch an ein Kommunikationsendgerät übertragen werden können, welches nicht datenpaketempfangsbereit ist (weil beispielsweise aktuell keine IP-Adresse zu diesem Kommunikationsendgerät zugeordnet ist). Auf den Empfang der schriftlichen Kurznachricht hin wird das zweite Kommunikationsendgerät vorteilhafterweise dazu angeregt, einen datenpaketempfangsbereiten Zustand einzunehmen ("Online-Schaltung des mobilen Kommunikationsendgerätes"). Daraufhin kann die Datenverbindung zur Übertragung von Datenpaketen zwischen dem ersten Kommunikationsendgerät und dem zweiten Kommunikationsendgerät aufgebaut werden.

Das Verfahren kann so ablaufen, dass von dem zweiten Kommunikationsendgerät ein datenpaketempfangsbereiter Zustand eingenommen wird, bei dem dem zweiten Kommunikationsendgerät eine zweite IP-Adresse zugeordnet ist, und die Datenverbindung zwischen dem durch eine erste IP-Adresse gekennzeichneten ersten Kommunikationsendgerät und dem durch die zweite IP-Adresse gekennzeichneten zweiten Kommunikationsendgerät aufgebaut wird. Dabei ist bei dem datenpaketempfangsbereiten Zustand ("Online-Zustand") dem zweiten Kommunikationsendgerät eine eigene IP-Adresse ("zweite IP-Adresse") zugeordnet.

Das Verfahren kann vorzugsweise so ablaufen, dass die an das zweite Kommunikationsendgerät übertragene schriftliche Kurznachricht die dem ersten Kommunikationsendgerät zugeordnete erste IP-Adresse enthält, von dem zweiten Kommunikationsendgerät die erste IP-Adresse aus der schriftlichen Kurznachricht ausgelesen wird, und von dem zweiten Kommunikationsendgerät die Datenverbindung zu dem durch die erste IP-Adresse gekennzeichneten ersten Kommunikationsendgerät aufgebaut wird. Hierbei ist insbesondere vorteilhaft, dass mit der schriftlichen Kurznachricht eine dem ersten Kommunikationsendgerät zugeordnete erste IP-Adresse übertragen wird. Unter Nutzung dieser ersten IP-Adresse und der bei dem zweiten mobilen Kommunikationsendgerät dann bekannten zweiten IP-Adresse kann daraufhin von dem zweiten Kommunikationsendgerät nach Empfang der schriftlichen Kurznachricht die Datenverbindung zwischen dem ersten und dem zweiten mobilen Kommunikationsendgerät aufgebaut werden.

Das erfindungsgemäße Verfahren kann auch so ablaufen, dass von dem ersten Kommunikationsendgerät ein Kennzeichen des zweiten Kommunikationsendgeräts an einen Adressumsetzer gesendet wird, daraufhin durch das erste Kommunikationsendgerät von dem Adressumsetzer die zweite IP-Adresse des zweiten Kommunikationsendgeräts empfangen wird, durch das erste Kommunikationsendgerät anhand der zweiten IP-Adresse überprüft wird, ob die Datenverbindung von dem zweiten Kommunikationsendgerät aufgebaut wird, und bei einem positiven Prüfungsergebnis der Aufbau der Datenverbindung zugelassen wird, oder bei einem negativen Prüfungsergebnis der Aufbau der Datenverbindung abgebrochen wird. Hierbei ist es vorteilhaft, dass durch das erste Kommunikationsendgerät mittels der von dem Adressumsetzer empfangenen zweiten IP-Adresse überprüft werden kann, ob die Datenverbindung tatsächlich von dem Kommunikationsendgerät aufgebaut wird, zu dem die schriftliche Kurznachricht übertragen wurde. Nur wenn diese Datenverbindung tatsächlich von dem (gewünschten) zweiten Kommunikationsendgerät aufgebaut wird, wird durch das erste Kommunikationsendgerät der Aufbau der Datenverbindung zugelassen. Andernfalls wird der Aufbau der Datenverbindung abgebrochen.

Das erfindungsgemäße Verfahren kann auch so ablaufen, dass bei dem ersten Kommunikationsendgerät bei Absenden der Startnachricht eine Zeitmessung begonnen wird und nur vor Ablauf einer vorbestimmten Zeitdauer der Aufbau der Datenverbindung zugelassen wird. Durch die Vorgabe der Zeitdauer, während der der Aufbau der Datenverbindung erfolgt sein muss, wird die Sicherheit vor einem unberechtigten Aufbau der Datenverbindung durch Dritte (die z.B. unberechtigterweise in den Besitz von über das Kommunikationsnetz KN1 übertragenen Nachrichten gelangt sind) erhöht.

Das Verfahren kann auch so ablaufen, dass die an das zweite Kommunikationsendgerät übertragene schriftliche Kurznachricht die dem ersten Kommunikationsendgerät zugeordnete erste IP-Adresse enthält, von dem zweiten Kommunikationsendgerät die erste IP-Adresse aus der schriftlichen Kurznachricht ausgelesen wird, von dem zweiten Kommunikationsendgerät ein die zweite IP-Adresse enthaltendes Datenpaket an das durch die erste IP-Adresse gekennzeichnete erste Kommunikationsendgerät gesendet wird, und daraufhin von dem ersten Kommunikationsendgerät ausgehend die Datenverbindung aufgebaut wird. Dadurch wird vorteilhafterweise erreicht, dass die aufzubauende Datenverbindung von dem ersten Kommunikationsendgerät (also von dem Kommunikationsendgerät, welches das Verfahren zum Aufbauen der Datenverbindung begonnen hat) aufgebaut wird. Damit wird die Sicherheit für das erste Kommunikationsendgerät erhöht, da dieses keinen Datenverbindungsaufbau durch ein anderes Kommunikationsendgerät akzeptieren muß.

Bei dem erfindungsgemäßen Verfahren kann die schriftliche Kurznachricht mit einer Mobiltelefonnummer des zweiten Kommunikationsendgeräts adressiert werden. Bei dem zweiten Kommunikationsendgerät handelt es sich in diesem Fall vorzugsweise um ein Mobiltelefon.

Das Verfahren kann so ablaufen, dass als Startnachricht eine SMS-Nachricht verwendet wird und diese SMS-Nachricht als schriftliche Kurznachricht an das zweite Kommunikationsendgerät übertragen wird. Hierbei bildet die als Startnachricht verwendete SMS-Nachricht auch die schriftliche Kurznachricht. Die SMS-Nachricht wird also in unveränderter Form als schriftliche Kurznachricht an das zweite Kommunikationsendgerät übertragen. Dazu können vorzugsweise die Nachrichtenleitungsmechanismen genutzt werden, welche in modernen Mobiltelefonnetzen (z.B. in GSM- oder GPRS-Mobiltelefonnetzen) standardmäßig zur Übertragung von SMS-Nachrichten vorgesehen sind. Dadurch lässt sich das erfindungsgemäße Verfahren einfach und kostengünstig realisieren.

Das erfindungsgemäße Verfahren kann aber auch so ablaufen, dass die Startnachricht an ein Gateway des Kommunikationsnetzes übertragen wird und daraufhin die schriftliche Kurznachricht an das zweite Kommunikationsendgerät übertragen wird.

Das Verfahren kann erfindungsgemäß so ablaufen, dass von dem ersten Kommunikationsendgerät eine Kennung des zweiten Kommunikationsendgeräts an einen Adressumsetzer gesendet wird, daraufhin durch das erste Kommunikationsendgerät von dem Adressumsetzer die zweite IP-Adresse des zweiten Kommunikationsendgeräts und Informationsdaten darüber empfangen werden, ob das zweite Kommunikationsendgerät zu diesem Zeitpunkt datenpaketempfangsbereit ist, im Falle eines nicht datenpaketempfangsbereiten zweiten Kommunikationsendgerätes die Startnachricht an das Kommunikationsnetz gesendet wird, oder im Falle eines datenpaketempfangsbereiten zweiten Kommunikationsendgerätes von dem ersten Kommunikationsendgerät die Datenverbindung zu dem durch die zweite IP-Adresse gekennzeichneten zweiten Kommunikationsendgerät aufgebaut wird. Dabei ist insbesondere vorteilhaft, dass die Startnachricht nur dann an das Kommunikationsnetz gesendet wird (und damit die schriftliche Kurzinformation auch nur dann an das zweite Kommunikationsendgerät übertragen wird), wenn mittels der Informationsdaten das erste Kommunikationsendgerät darüber informiert wird, dass das zweite Kommunikationsendgerät nicht datenpaketempfangsbereit (nicht "online") ist. Im Falle eines datenpaketempfangsbereiten zweiten Kommunikationsendgerätes wird die Datenverbindung sofort von dem ersten Kommunikationsendgerät aufgebaut, wodurch das Senden der Startnachricht, das Übertragen der schriftlichen Kurzinformation usw. überflüssig werden.

Bei dem erfindungsgemäßen Verfahren kann als Kennzeichen oder als Kennung eine Mobiltelefonnummer verwendet werden.

Zur weiteren Erläuterung wird nachfolgend das erfindungsgemäße Verfahren anhand von in den Figuren dargestellten Ausführungsbeispielen erläutert.

Dabei ist in
Figur 1 schematisch ein Kommunikationsnetz mit zwei mobilen Endgeräten, in
Figur 2 anhand eines Nachrichtenflussdiagramms ein Ausführungsbeispiel des erfindungsgemäßen Verfahrens, in
Figur 2a ein modifiziertes Ausführungsbeispiel des erfindungsgemäßen Verfahrens, in
Figur 3 anhand eines weiteren Nachrichtenflussdiagramms ein weiteres Ausführungsbeispiel des erfindungsgemäßen Verfahrens, in
Figur 4 ein Ausführungsbeispiel des erfindungsgemäßen Verfahrens mit einer SMS-Push-Nachricht und in
Figur 5 ein weiteres Ausführungsbeispiel des erfindungsgemäßen Verfahrens dargestellt.

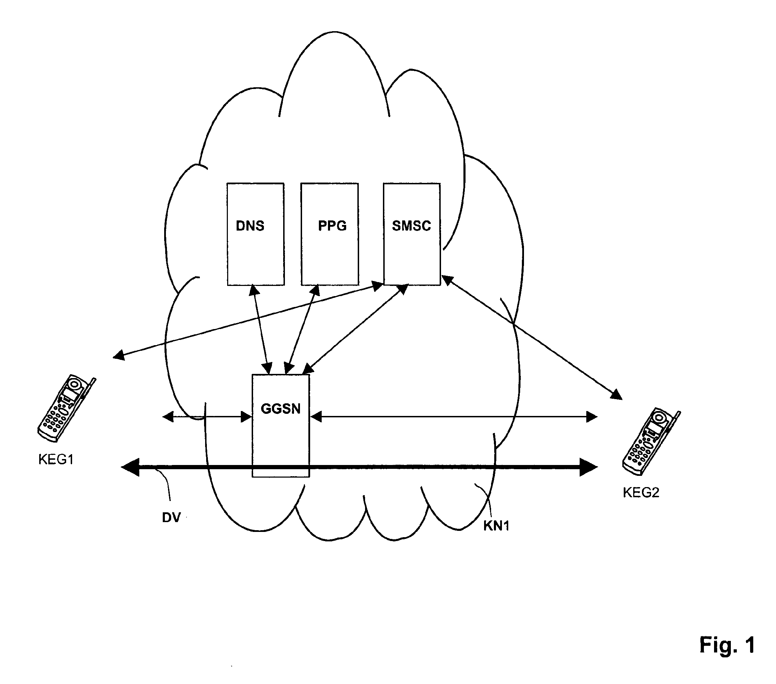

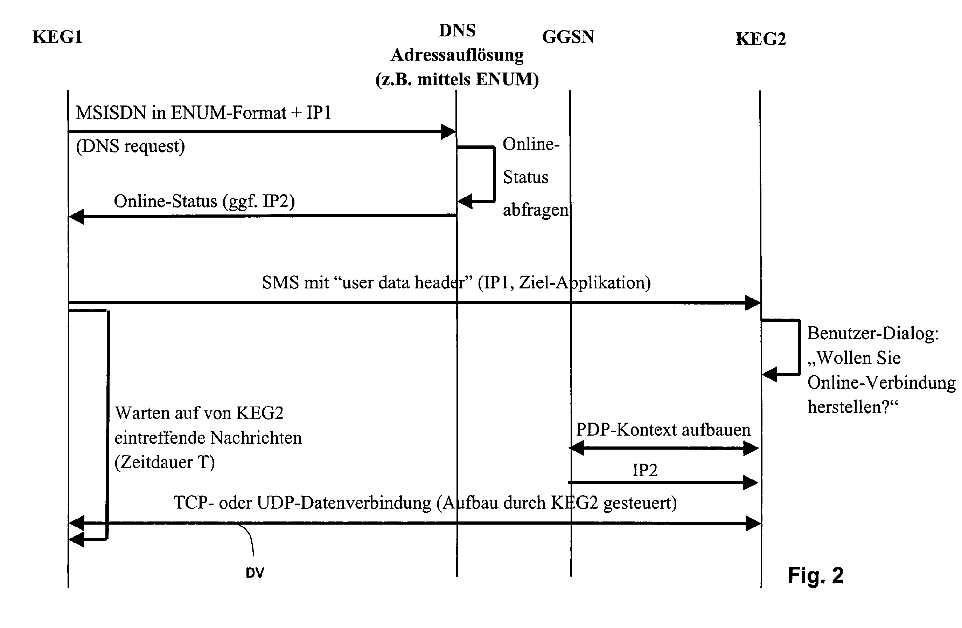

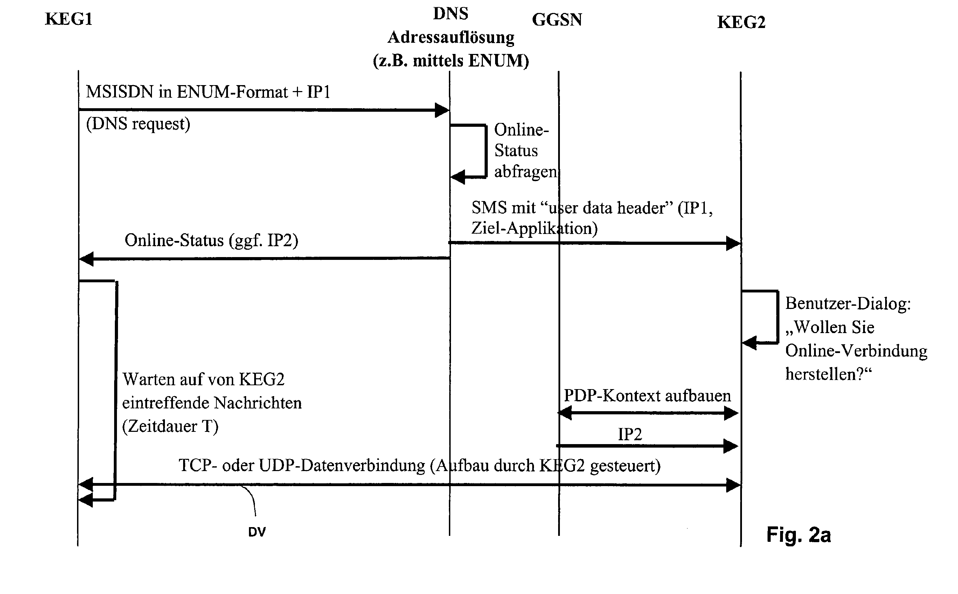

In Figur 1 ist ein erstes mobiles Kommunikationsendgerät KEG1 und ein zweites mobiles Kommunikationsendgerät KEG2 in Form je eines Mobiltelefons dargestellt. In einem anderen Ausführungsbeispiel kann es sich bei den mobilen Kommunikationsendgeräten aber auch beispielsweise um Palmtops, Persönliche Digitale Assistenten (PDAs) oder tragbare Rechner mit einer Mobilfunkschnittstelle handeln. In diesem Ausführungsbeispiel ist das erste Kommunikationsendgerät KEG1 in Form eines Mobiltelefons in bekannter Weise über eine Luftschnittstelle mit einem Kommunikationsnetz KN1 verbunden, bei dem es sich im Ausführungsbeispiel um ein GPRS-Mobilfunknetz (GPRS = General Packet Radio Service) handelt. Von diesem Kommunikationsnetz KN1 sind lediglich ausgewählte Elemente dargestellt: Eine Vermittlungsstelle GGSN (GGSN = GPRS gateway service node), ein Adressumsetzer DNS (DNS = domain name server), ein Proxy-Gateway PPG für den sogenannten "Push-Service" (PPG = Push Proxy Gateway) und ein Service-Zentrum SMSC für schriftlich Kurznachrichten (SMSC = short message service center, Nachrichtenzentrum). Das Kommunikationsnetz KN1 ist mit dem zweiten mobilen Kommunikationsendgerät KEG2 verbunden. Das Zusammenwirken der Elemente des Kommunikationsnetzes zur Durchführung des erfindungsgemäßen Verfahrens zum Aufbauen einer Datenverbindung wird im Folgenden im Zusammenhang mit den Figuren 2 bis 4 erläutert.

In Figur 2 ist anhand eines Nachrichtenflussdiagramms ein erstes Ausführungsbeispiel des erfindungsgemäßen Verfahrens dargestellt. Auf dem mobilen Kommunikationsendgerät KEG1 wird ein IP-basiertes (IP = Internet Protocol) Peer-to-Peer-Anwendungsprogramm gestartet, welches gemeinsam mit einem Peer-to-Peer-Anwendungsprogramm ("Ziel-Applikation") des zweiten mobilen Kommunikationsendgeräts KEG2 eine Datenverbindung zwischen den mobilen Kommunikationsendgeräten realisieren soll. Bei einem solchen Peer-to-Peer-Anwendungsprogramm (auch kurz Peer-to-Peer-Anwendung genannt) des ersten Kommunikationsendgeräts kann es sich beispielsweise um ein Fotoverwaltungsprogramm handeln, welches mittels des ersten Kommunikationsendgeräts KEG1 erstellte Fotos über eine Datenverbindung direkt zu einem ähnlichen Peer-to-Peer-Anwendungsprogramm in Form eines Fotoverwaltungsprogramms des zweiten Kommunikationsendgerätes KEG2 übertragen soll.

Die bei dem ersten Kommunikationsendgerät KEG1 bekannte (beispielsweise von einem Benutzer eingegebene) Mobiltelefonnummer MSISDN (MSISDN = Mobile Station ISDN Number) des zweiten Kommunikationsendgerätes KEG2 wird von dem Anwendungsprogramm des ersten Kommunikationsendgeräts KEG1 aus dem E.164-Format (z.B. +49 172 1234567) in das ENUM-Format (z.B. 7.6.5.4.3.2.1.2.7.1.9.4.e164.arpa) umgewandelt. In diesem ENUM-Format wird die Mobiltelefonnummer MSISDN des zweiten Kommunikationsendgerätes KEG2 (die eine Kennung bzw. ein Kennzeichen des zweiten Kommunikationsendgerätes KEG2 darstellt) von dem ersten Kommunikationsendgerät KEG1 mittels einer Nachricht "DNS Request" an einen Adressumsetzer DNS des Kommunikationsnetzes übertragen. Zusammen mit dieser Mobiltelefonnummer wird auch eine erste IP-Adresse IP1 des ersten Kommunikationsendgeräts an den Adressumsetzer DNS übertragen. Zur Adressumsetzung (auch Adressauflösung genannt) wird ein an sich bekannter "Domain Name Server" DNS verwendet.

Der Adressumsetzer DNS ermittelt anhand der Mobiltelefonnummer MSISDN in an sich bekannter Weise die zweite IP-Adresse IP2 des zweiten Kommunikationsendgerätes KEG2 sowie die Information, ob das zweite Kommunikationsendgerät zu diesem Zeitpunkt datenpaketeempfangsbereit ("online") ist. Diese Ermittlung der Datenpaketeempfangsbereitschaft wird auch als "Abfrage des Online Status" bezeichnet, da der Adressumsetzer diese Information in an sich bekannter Weise von einem anderen Netzelement des Kommunikationsnetzes KN1 (beispielsweise aus einem nicht dargestellten Heimatregister HLR, einem RADIUS-Authentisierungs-Server, einem Präsenz-Server oder einem Multimedia-Subsystem IMS) abfragt. Dieser Online Status ("KEG2 ist online" oder "KEG2 ist nicht online") wird von dem Adressumsetzer DNS an das erste Kommunikationsendgerät KEG1 übermittelt. Weiterhin wird (sofern bekannt) die zweite IP-Adresse IP2 des zweiten Kommunikationsendgerätes KEG2 an das erste Kommunikationsendgerät KEG1 übertragen.

Wenn das zweite Kommunikationsendgerät KEG2 datenpaketempfangsbereit ("online") ist, dann wird von dem ersten Kommunikationsendgerät die Datenverbindung direkt zu dem durch die zweite IP-Adresse IP2 gekennzeichneten zweiten Kommunikationsendgerät KEG2 aufgebaut (dieser Fall ist in den Figuren nicht dargestellt). In diesem Fall erübrigen sich auch die im folgenden beschriebenen Verfahrensschritte und der Aufbau der Datenverbindung ist abgeschlossen.

Für den Fall, dass das zweite Kommunikationsendgerät KEG2 nicht datenpaketempfangsbereit (nicht "online") ist, erstellt das erste Kommunikationsendgerät KEG1 eine Startnachricht und sendet diese an das Kommunikationsnetz KN1 ab. In dem in der Figur 2 dargestellten Ausführungsbeispiel wird als Startnachricht eine SMS-Nachricht erzeugt, welche ein spezielles Format aufweist. Diese SMS-Nachricht weist nämlich einen sogenannten "User Data Header" (UDH/TP-UDHI) auf, wie er beispielsweise aus der Druckschrift 3GPP TS 23.040, V6.2.0, Technical Specification, 3rd Generation Partnership Project; Technical Specification Group Terminals; Technical realization of the Short Message Service (SMS) bekannt ist. Von dem Kommunikationsnetz KN1 wird diese Startnachricht in unveränderter Form als schriftliche Kurznachricht SMS an das zweite Kommunikationsendgerät KEG2 übertragen. In dieser schriftlichen Kurznachricht SMS ist die erste IP-Adresse IP1 des ersten Kommunikationsendgerätes KEG1 sowie eine Information über das Anwendungsprogramm ("Ziel-Applikation") des zweiten Kommunikationsendgerätes KEG2 enthalten, welches an der aufzubauenden Datenverbindung teilnehmen soll.

Nach dem Absenden der Startnachricht nimmt das Anwendungsprogramm des ersten Kommunikationsendgerätes KEG1 einen Wartezustand ein und wartet (beispielsweise an einem UDP- oder TCP-Port) auf eine von dem zweiten Kommunikationsendgerät KEG2 eintreffende Nachricht. Mit dem Absenden der Startnachricht SMS wird bei dem ersten Kommunikationsendgerät KEG1 (beispielsweise durch Starten eines Zeitgebers) eine Zeitmessung begonnen. Nur solche von dem zweiten Kommunikationsendgerät KEG2 eintreffende Nachrichten, die innerhalb einer vorbestimmten Zeitdauer T eintreffen, können zum Aufbau einer Datenverbindung führen.

Die schriftliche Kurznachricht SMS wird nun von dem zweiten Kommunikationsendgerät KEG2 empfangen. Aufgrund des speziellen Formats dieser schriftlichen Kurznachricht (z. B. aufgrund des User Data Headers) wird diese schriftliche Kurznachricht jedoch nicht wie eine für einen menschlichen Nutzer des zweiten Kommunikationsendgerätes KEG2 bestimmte schriftliche Kurznachricht behandelt (d.h. sie wird z.B. nicht auf einer Anzeigeeinrichtung des zweiten Kommunikationsendgerätes angezeigt), sondern diese das spezielle Format aufweisende schriftliche Kurznachricht wird von dem SMS-Stack des zweiten Kommunikationsendgerätes KEG2 entfernt. Daraufhin wird von dem zweiten Kommunikationsendgerät KEG2 ein Benutzerdialog begonnen, indem beispielsweise auf der Anzeigeeinheit des zweiten Kommunikationsendgerätes der Text "Wollen Sie eine Online-Verbindung herstellen?" ausgegeben wird. Wenn ein Benutzer des zweiten Kommunikationsendgerätes KEG2 die Online-Datenverbindung nicht herstellen möchte und eine entsprechende Taste (z.B. die "0"-Taste mit der Bedeutung "Nein") des Kommunikationsendgerätes KEG2 betätigt, dann werden von dem zweiten Kommunikationsendgerät KEG2 keine weiteren Verfahrensschritte zum Aufbau der Datenverbindung mehr ausgeführt. Daraufhin läuft der bei dem ersten Kommunikationsendgerät KEG1 gestartete Zeitgeber bei Erreichen der vorbestimmten Zeitdauer T ab; mit Ablauf dieses Zeitgebers wird auch bei dem ersten Kommunikationsendgerät KEG1 das Verfahren beendet.

Wenn der Benutzer aber die Online-Datenverbindung herstellen möchte und eine entsprechende Taste (z.B. die "1"-Taste mit der Bedeutung "Ja") betätigt, dann wird von dem zweiten Kommunikationsendgerät ein datenpaketempfangsbereiter Zustand eingenommen. Zur Erlangung eines solchen datenpaketempfangsbereiten Zustandes ("Online"-Zustand) wird von dem zweiten Kommunikationsendgerät KEG2 ein an sich bekannter PDP-Kontext (PDP = Packet Data Protocol) zu der Vermittlungsstelle GGSN aufgebaut. Dadurch wird dem zweiten Kommunikationsendgerät KEG2 der Empfang von IP-Datenpaketen ermöglicht; es wird eine Online-Verbindung zum Kommunikationsnetz KN1 hergestellt. Von der Vermittlungsstelle GGSN erhält das zweite Kommunikationsendgerät KEG2 die zweite IP-Adresse IP2 zugeteilt.

Von dem zweiten Kommunikationsendgerät KEG2 wird aus der schriftlichen Kurznachricht SMS die dem ersten Kommunikationsendgerät KEG1 zugeordnete erste IP-Adresse IP1 ausgelesen und unter Benutzung dieser ersten IP-Adresse IP1 und der zweiten IP-Adresse IP2 die Datenverbindung DV zu dem durch die erste IP-Adresse IP1 gekennzeichneten ersten Kommunikationsendgerät KEG1 aufgebaut. Der Aufbau dieser Datenverbindung DV wird in diesem Ausführungsbeispiel also durch das zweite Kommunikationsendgerät KEG2 gesteuert. Bei der Datenverbindung kann es sich entweder im eine verbindungsorientierte Datenverbindung (beispielsweise um eine TCP-Datenverbindung, TCP = transmission control protocol) oder um eine verbindungslose Datenverbindung (beispielsweise um eine UDP-Datenverbindung, UDP = user datagram protocol) handeln. Sofern diese Datenverbindung vor Ablauf der mit dem Zeitgeber des Kommunikationsendgerätes KEG1 gemessenen vorbestimmten Zeitdauer aufgebaut wird, wird der Aufbau der Datenverbindung von dem ersten Kommunikationsendgerät KEG1 zugelassen.

In einer alternativen Ausführungsform des erfindungsgemäßen Verfahrens kann bei Beginn des durch das zweite Kommunikationsendgerät KEG2 gesteuerten Aufbaus der Datenverbindung von dem ersten Kommunikationsendgerät (anhand der von dem Adressumsetzer DNS an das erste Kommunikationsendgerät KEG1 übermittelten zweiten IP-Adresse IP2) überprüft werden, ob die Datenverbindung DV tatsächlich von dem zweiten Kommunikationsendgerät KEG2 aufgebaut wird. Bei Beginn des Aufbauens der Datenverbindung teilt nämlich das zweite Kommunikationsendgerät KEG2 die diesem zugeordnete zweite IP-Adresse IP2 an das erste Kommunikationsendgerät KEG1 mit. Nur bei einem positivem Prüfungsergebnis (wenn also die von dem zweiten Kommunikationsendgerät KEG2 übermittelte zweite IP-Adresse IP2 mit der von dem Adressumsetzer DNS übermittelten zweiten IP-Adresse IP2 übereinstimmt) wird seitens des ersten Kommunikationsendgerätes KEG1 der Aufbau der Datenverbindung zugelassen. Andernfalls wird der Aufbau der Datenverbindung abgebrochen.

In Figur 2a ist ein weiteres Ausführungsbeispiel dargestellt, das sich von dem mittels der Figur 2 beschriebenen Ausführungsbeispiel dadurch unterscheidet, dass der Adressumsetzer DNS nach der Abfrage des Online-Status die schriftliche Kurzinformation SMS an das zweite Kommunikationsendgerät KEG2 sendet. Die darauffolgenden Verfahrensschritte entsprechen wieder den in der Figur 2 dargestellten Verfahrensschritten.

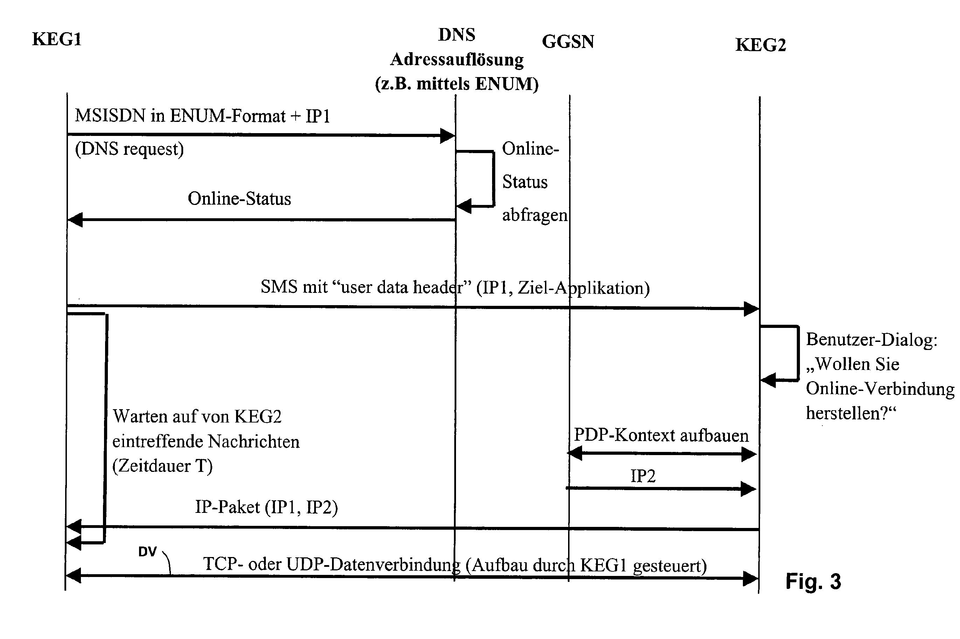

In Figur 3 ist ein weiteres Ausführungsbeispiel des erfindungsgemäßen Verfahrens dargestellt. Dieses Ausführungsbeispiel unterscheidet sich von dem im Zusammenhang mit der Figur 2 erläuterten Ausführungsbeispiel dadurch, dass von dem Adressumsetzer DNS nur der Online-Status "nicht online" an das erste Kommunikationsendgerät KEG1 übertragen wird, nicht jedoch die zweite IP-Adresse IP2. Dies kann z.B. dann auftreten, wenn eine dynamische (z.B. fallweise wechselnde) Zuordnung von IP-Adressen zu dem zweiten Kommunikationsendgerät KEG2 erfolgt. Weiterhin unterscheidet sich dieses Ausführungsbeispiel von dem im Zusammenhang mit der Figur 2 erläuterten Ausführungsbeispiel dadurch, dass nach Aufbau des PDP-Kontexts und nach Erhalt der zweiten IP-Adresse IP2 durch das zweite Kommunikationsendgerät KEG2 ein Datenpaket (IP-Paket), welches die zweite IP-Adresse IP2 enthält, an das durch die erste IP-Adresse IP1 gekennzeichnete erste Kommunikationsendgerät KEG1 gesendet wird. Nach Empfang dieses Datenpakets ist dem ersten Kommunikationsendgerät KEG1 die zweite IP-Adresse IP2 des zweiten Kommunikationsendgeräts bekannt, und es wird daraufhin von dem ersten Kommunikationsendgerät KEG1 ausgehend (von dem ersten Kommunikationsendgerät KEG1 gesteuert) die Datenverbindung zwischen dem ersten Kommunikationsendgerät KEG1 und dem zweiten Kommunikationsendgerät KEG2 aufgebaut.

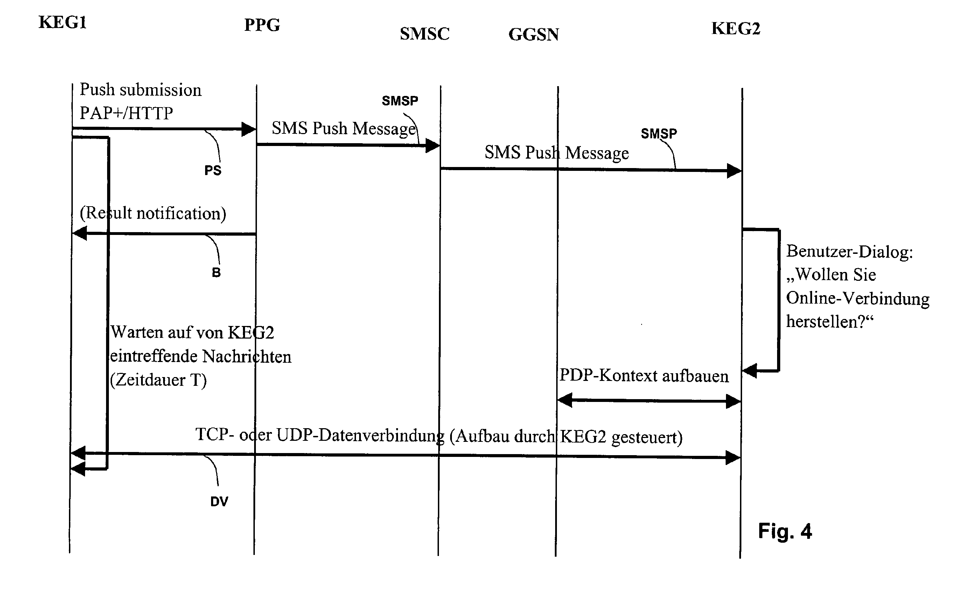

In Figur 4 ist ein weiteres Beispiel eines Verfahrensablaufes dargestellt, bei dem als Startnachricht eine Nachricht PS "Push Submission" unter Benutzung des PAP+/HTTP-Protokolls (PAP+ ist eine Erweiterung des PAP-Protokolls, PAP = Push Access Protocol, HTTP = Hypertext Transfer Protocol) an das Proxy-Gateway PPG des Kommunikationsnetzes KN1 übertragen wird. Eine ENUM-Adressauflösung ist hierbei nicht notwendig. In diesem Beispiel eines Push-Dienstes ("unconfirmed push") wird die Mobiltelefonnummer MSISDN als Kennzeichen zur Adressierung verwendet, alternativ können auch andere Kennzeichen als Adressen verwendet werden (z.B. E-Mail-Adressen, die vom Gateway PPG aufgelöst werden). Diese Startnachricht PS enthält neben der ersten IP-Adresse IP1 auch eine Information über die zum Aufbau der Datenverbindung auf dem zweiten Kommunikationsendgerät KEG2 zu nutzende Anwendungssoftware (Applikationssoftware). Das Proxy-Gateway PPG empfängt die Startnachricht PS und überprüft den Online-Status des Nutzers (z.B. unter Nutzung eines in der Figur nicht dargestellten WAP-Gateways oder eines RADIUS-Servers). Wenn das zweite Kommunikationsendgerät KEG2 nicht "online" ist, dann überträgt das Proxy-Gateway PPG daraufhin eine SMS-Push-Nachricht SMSP ("SMS Push Message") an das zweite Kommunikationsendgerät KEG2 unter Benutzung des Protokolls "Push-Over-the-air-protocols (Push-OTA)". (Das Push-OTA-Protokoll kann sich verschiedener "bearer" (wie SMS oder GPRS) bedienen. Wenn das zweite Kommunikationsendgerät KEG2 nicht "online" ist, dann sendet das Proxy-Gateway PPG die Push-Nachricht SMSP - wie oben beschrieben - mittels SMS ab.) Die schriftliche Kurznachricht SMSP wird also in Form einer SMS-Push-Nachricht von dem Proxy-Gateway PPG über das Service-Zentrum SMSC an das zweite Kommunikationsendgerät KEG2 übermittelt. Von dem Proxy-Gateway PPG wird daraufhin (optional) eine Bestätigungsnachricht B "Result Notification" an das erste Kommunikationsendgerät KEG1 übermittelt.
Das Durchführen des Benutzerdialogs und der Aufbau des PDP-Kontexts erfolgen daraufhin analog zu dem im Zusammenhang mit der Figur 2 beschriebenen Verfahren. Da mittels der schriftlichen Kurznachricht SMSP auch eine Information über die in dem ersten Kommunikationsendgerät KEG1 beim Aufbau der Datenverbindung zu verwendende Anwendungssoftware an das zweite Kommunikationsendgerät KEG2 übertragen wurde, kann nun durch die Anwendungssoftware des zweiten Kommunikationsendgerätes KEG2 unmittelbar die Datenverbindung zu der Anwendungssoftware des ersten Kommunikationsendgerätes KEG1 aufgebaut werden. Die Protokolle Push-OTA und PAP sind aus den Spezifikationen "WAP-235-PushOTA-20010425-a" und "WAP-247-PAP-20010429-a" der Open Mobile Alliance (OMA) bekannt.

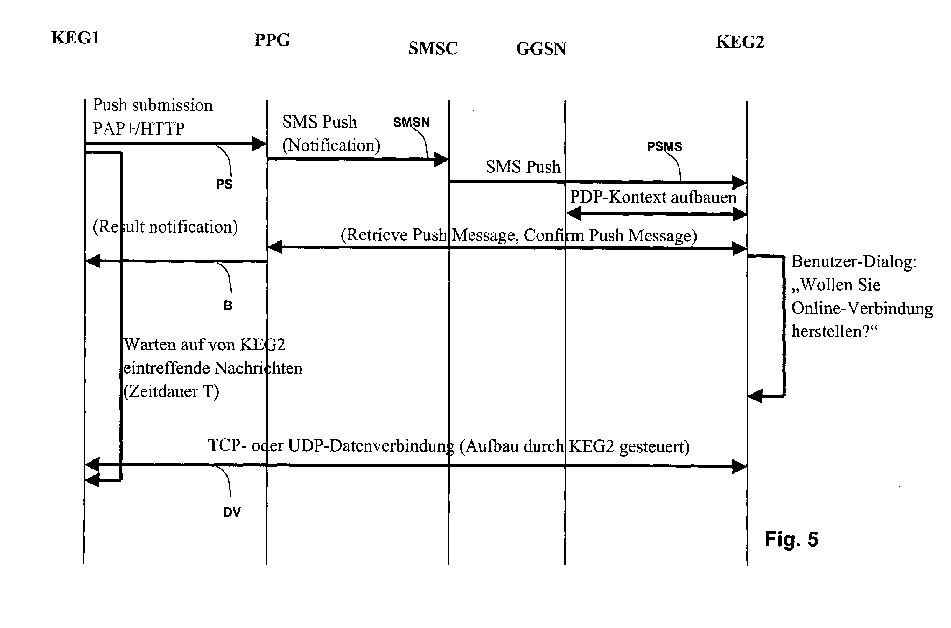

In Figur 5 ist ein weiteres Beispiel eines Verfahrensablaufes dargestellt, bei dem als Startnachricht eine Nachricht PS "Push Submission" unter Benutzung des PAP+/HTTP-Protokolls an das Proxy-Gateway PPG des Kommunikationsnetz KN1 übertragen wird. Im Unterschied zu dem mittels der Figur 4 erläuterten Verfahren überträgt das erste Kommunikationsendgerät KEG1 mit der Nachricht PS (neben der ersten IP-Adresse IP1 und der Information über die zum Aufbau der Datenverbindung auf dem zweiten Kommunikationsendgerät KEG2 zu nutzenden Anwendungssoftware) zusätzlich die Information, dass die Auslieferungsmethode "confirmed push" verwendet werden soll. Das Proxy-Gateway PPG empfängt (wie bei dem im Zusammenhang mit der Figur 4 erläuterten Verfahren) die Startnachricht PS und überprüft den Online Status des Nutzers bzw. des zweiten Kommunikationsendgerätes KEG2 (z.B. unter Nutzung eines in der Figur nicht dargestellten WAP-Gateways oder eines RADIUS-Servers). Wenn das zweite Kommunikationsendgerät KEG2 nicht online ist, dann überträgt das Proxy-Gateway PPG eine Informationsnachricht SMSN ("SMS Push (Notification)") an das Service-Zentrum SMSC. Daraufhin sendet das Service-Zentrum SMSC als schriftliche Kurznachricht eine SMS-Push-Nachricht PSMS (welche auch als "session initialization request" bezeichnet wird) unter Benutzung des Push-Over-the-air-protocols (Push-OTA) an das zweite Kommunikationsendgerät KEG2. Nach Erhalt der SMS-Push-Nachricht PSMS baut das zweite Kommunikationsendgerät KEG2 einen PDP-Kontext auf und fordert eine weitere Push-Nachricht, welche die erste IP-Adresse IP1 und die Information über die Anwendungssoftware enthält, von dem Proxy-Gateway PPG ab ("Retrieve Push Message"). Daraufhin bestätigt das zweite Kommunikationsendgerät KEG2 den Empfang dieser weiteren Push-Nachricht ("Confirm Push Message"). Von dem Proxy-Gateway PPG wird daraufhin (optional) eine Bestätigungsnachricht B "Result Notification" an das erste Kommunikationsendgerät KEG1 übermittelt. Das Durchführen des Benutzerdialogs und der Aufbau der Datenverbindung erfolgt daraufhin analog zu den im Zusammenhang mit der Figur 2 und Figur 4 beschriebenen Verfahren.

Es wurde ein Verfahren zum Aufbauen einer Datenverbindung zur Übertragung von Datenpaketen zwischen mobilen Kommunikationsendgeräten beschrieben, welches eine Reihe von Vorteilen aufweist. Von Seiten des ersten Kommunikationsendgerätes KEG1 kann (mittels der Startnachricht) der Aufbau einer Datenverbindung zu dem zweiten Kommunikationsendgerät KEG2 veranlasst werden, auch wenn dieses zweite Kommunikationsendgerät KEG2 keinen PDP-Kontext aufgebaut hat, also nicht "online" und damit nicht datenpaketempfangsbereit ist. Dieses Verfahren lässt sich auch dann durchführen, wenn dem zweiten Kommunikationsendgerät KEG2 dynamisch IP-Adressen zugeordnet werden. Dies wird vorteilhafterweise durch die Adressauflösung im Domain-Name-Server DNS mittels des ENUM-Verfahrens ermöglicht. Da der Versand von schriftlichen Kurznachrichten im allgemeinen vom Absender zu bezahlen ist (also hier vom ersten Kommunikationsendgerät KEG1), wird die Wahrscheinlichkeit eines Missbrauchs des Verfahrens (beispielsweise zum massenhaften Aufbauen von Datenverbindungen zur Übertragung von unerwünschten Werbenachrichten) reduziert.

## Patentansprüche

1. Verfahren zum Aufbauen einer Datenverbindung (DV) zur Übertragung von Datenpaketen zwischen einem ersten mobilen Kommunikationsendgerät (KEG1) und einem zweiten mobilen Kommunikationsendgerät (KEG2), wobei bei dem Verfahren
- auf eine Startnachricht (PS) des ersten datenpaketempfangsbereiten Kommunikationsendgerätes (KEG1) hin von einem mit dem ersten (KEG1) und dem zweiten Kommunikationsendgerät (KEG2) verbundenen Kommunikationsnetz (KN1) eine schriftliche Kurznachricht (SMS, SMSP, PSMS) an das zweite Kommunikationsendgerät (KEG2) übertragen wird,
- auf den Empfang der schriftlichen Kurznachricht (SMS, SMSP, PSMS) hin von dem zweiten Kommunikationsendgerät (KEG2) ein datenpaketempfangsbereiter Zustand eingenommen wird, und
- daraufhin die Datenverbindung zwischen dem ersten Kommunikationsendgerät (KEG1) und dem zweiten Kommunikationsendgerät (KEG2) aufgebaut wird.

2. Verfahren nach Anspruch 1,
**dadurch gekennzeichnet, dass**
- von dem zweiten Kommunikationsendgerät (KEG2) ein datenpaketempfangsbereiter Zustand eingenommen wird, bei dem dem zweiten Kommunikationsendgerät eine zweite IP-Adresse (IP2) zugeordnet ist, und
- die Datenverbindung zwischen dem durch eine erste IP-Adresse (IP1) **gekennzeichneten** ersten Kommunikationsendgerät (KEG1) und dem durch die zweite IP-Adresse (IP2) **gekennzeichneten** zweiten Kommunikationsendgerät (KEG2) aufgebaut wird.

3. Verfahren nach Anspruch 2,
**dadurch gekennzeichnet, dass**
- die an das zweite Kommunikationsendgerät (KEG2) übertragene schriftliche Kurznachricht (SMS, SMSP, PSMS) die dem ersten Kommunikationsendgerät (KEG1) zugeordnete erste IP-Adresse (IP1) enthält,
- von dem zweiten Kommunikationsendgerät (KEG2) die erste IP-Adresse (IP1) aus der schriftlichen Kurznachricht ausgelesen wird, und
- von dem zweiten Kommunikationsendgerät (KEG2) die Datenverbindung (DV) zu dem durch die erste IP-Adresse (IP1) **gekennzeichneten** ersten Kommunikationsendgerät (KEG1) aufgebaut wird.

4. Verfahren nach Anspruch 2 oder 3,
**dadurch gekennzeichnet, dass**
- von dem ersten Kommunikationsendgerät (KEG1) ein Kennzeichen (MSISDN) des zweiten Kommunikationsendgeräts (KEG2) an einen Adressumsetzer (DNS) gesendet wird,
- daraufhin durch das erste Kommunikationsendgerät (KEG1) von dem Adressumsetzer (DNS) die zweite IP-Adresse (IP2) des zweiten Kommunikationsendgeräts (KEG2) empfangen wird,
- durch das erste Kommunikationsendgerät (KEG1) anhand der zweiten IP-Adresse (IP2) überprüft wird, ob die Datenverbindung (DV) von dem zweiten Kommunikationsendgerät (KEG2) aufgebaut wird, und
- bei einem positiven Prüfungsergebnis der Aufbau der Datenverbindung (DV) zugelassen wird, oder
- bei einem negativen Prüfungsergebnis der Aufbau der Datenverbindung (DV) abgebrochen wird.

5. Verfahren nach einem der vorhergehenden Ansprüche,
**dadurch gekennzeichnet, dass**
- bei dem ersten Kommunikationsendgerät (KEG1) bei Absenden der Startnachricht eine Zeitmessung begonnen wird und nur vor Ablauf einer vorbestimmten Zeitdauer (T) der Aufbau der Datenverbindung (DV) zugelassen wird.

6. Verfahren nach Anspruch 2,
**dadurch gekennzeichnet, dass**
- die an das zweite Kommunikationsendgerät (KEG2) übertragene schriftliche Kurznachricht (SMS) die dem ersten Kommunikationsendgerät (KEG1) zugeordnete erste IP-Adresse (IP1) enthält,
- von dem zweiten Kommunikationsendgerät (KEG2) die erste IP-Adresse (IP1) aus der schriftlichen Kurznachricht ausgelesen wird,
- von dem zweiten Kommunikationsendgerät (KEG2) ein die zweite IP-Adresse (IP2) enthaltendes Datenpaket an das durch die erste IP-Adresse (IP1) **gekennzeichnete** erste Kommunikationsendgerät (KEG1) gesendet wird, und
- daraufhin von dem ersten Kommunikationsendgerät (KEG1) ausgehend die Datenverbindung (DV) aufgebaut wird.

7. Verfahren nach einem der vorhergehenden Ansprüche,
**dadurch gekennzeichnet, dass**
- die schriftliche Kurznachricht (SMS, SMSP, PSMS) mit einer Mobiltelefonnummer (MSISDN) des zweiten Kommunikationsendgeräts (KEG2) adressiert wird.

8. Verfahren nach einem der vorhergehenden Ansprüche,
**dadurch gekennzeichnet, dass**
- als Startnachricht eine SMS-Nachricht (SMS) verwendet wird, und
- diese SMS-Nachricht als schriftliche Kurznachricht an das zweite Kommunikationsendgerät (KEG2) übertragen wird.

9. Verfahren nach einem der Ansprüche 1 bis 7,
**dadurch gekennzeichnet, dass**
- die Startnachricht (PS) an ein Gateway (PPG) des Kommunikationsnetzes (KN1) übertragen wird, und
- daraufhin die schriftliche Kurznachricht (SMSP, PSMS) an das zweite Kommunikationsendgerät (KEG2) übertragen wird.

10. Verfahren nach einem der Ansprüche 2 bis 9,
**dadurch gekennzeichnet, dass**
- von dem ersten Kommunikationsendgerät (KEG1) eine Kennung (MSISDN) des zweiten Kommunikationsendgeräts (KEG2) an einen Adressumsetzer (DNS) gesendet wird,
- daraufhin durch das erste Kommunikationsendgerät (KEG1) von dem Adressumsetzer (DNS) die zweite IP-Adresse (IP2) des zweiten Kommunikationsendgeräts (KEG2) und Informationsdaten darüber empfangen werden, ob das zweite Kommunikationsendgerät (KEG2) zu diesem Zeitpunkt datenpaketempfangsbereit ist,
- im Falle eines nicht datenpaketempfangsbereiten zweiten Kommunikationsendgerätes (KEG2) die Startnachricht an das Kommunikationsnetz (KN1) gesendet wird, oder
- im Falle eines datenpaketempfangsbereiten zweiten Kommunikationsendgerätes (KEG2) von dem ersten Kommunikationsendgerät (KEG1) die Datenverbindung (DV) zu dem durch die zweite IP-Adresse (IP2) **gekennzeichneten** zweiten Kommunikationsendgerät (KEG2) aufgebaut wird.

11. Verfahren nach einem der Ansprüche 4 bis 10,
**dadurch gekennzeichnet, dass**
- als Kennzeichen oder als Kennung eine Mobiltelefonnummer (MSISDN) verwendet wird.
